# EUROPEAN PATENT SPECIFICATION

(11) **EP 4 362 413 B1**
(45) Date of publication and mention of the grant of the patent: **10.09.2025**
(21) Application number: 22871108.1
(22) Date of filing: 29.11.2022
(51) Int. Cl.: H04L 41/0869, H04L 12/22, H04L 41/08, H04L 41/28

(54) **DIAGNOSTIC DEVICE AND DIAGNOSIS METHOD**
DIAGNOSEVORRICHTUNG UND DIAGNOSEVERFAHREN
DISPOSITIF DE DIAGNOSTIC ET PROCÉDÉ DE DIAGNOSTIC

(30) Priority: 15.09.2022 JP 2022147446
(43) Date of publication of application: 01.05.2024
(73) Proprietor: Industrial Security Provide Ltd., Kanagawa-ku, Yokohama-shi, Kanagawa 2360052 (JP)
(72) Inventor: MORIMOTO Kenichi, Yokohama-shi, Kanagawa 231-0004 (JP)
(74) Representative: Strehl & Partner mbB
(86) International application number: PCT/JP2022/044056
(87) International publication number: WO 2024/057557

(56) References cited:
- WO-A2-2011/112473
- CN-A- 103 443 782
- JP-A- 2016 066 945
- JP-A- 2016 066 945
- US-A1- 2011 238 792
- US-A1- 2019 349 426
- US-B1- 10 193 695
- US-B2- 10 142 204

## Description

### Technical Field

The present invention relates to a diagnostic apparatus and a diagnostic method.

### Background Art

In order to assure security in a network, a communication control device acting as a barrier such as a firewall is typically deployed at a connection with an external network. As for the firewall, various techniques for ensuring a high level of security have been studied, with recent developments of information and communication technology.

For example, Patent Literature 1 discloses that when a server apparatus within a network receives an access request specifying the server's name from an information and communications terminal outside the network, an access control list is dynamically created to dynamically assign an address of the server and record the addresses of the server apparatus and the information and communications terminal, which enhances the security performance.
Further related art is disclosed in the documents US 2011/238792 A1,
CN 103 443 782 A, US 2019/349426 A1 and WO 2011/112473 A2.

### Citation List

### Patent Literature

Patent Literature 1: Japanese Laid-Open Patent Publication No. 2009-272659

### Summary of Invention

### Technical Problem

Recently, in plants, infrastructures, production factories, or other such places, control networks have been connected to one another to establish a single wide-area network instead of being provided separately for each facility conventionally, in order to aggregate operating statuses of hardware such as facilities and promote efficiency of operation and maintenance. Such a network is sometimes called an Operational Technology (OT) network to distinguish from a network used for a direct monitoring operation and control of facilities.

To avoid disturbance in the control network and protect a control computer from unauthorized access, the OT network includes barriers on different locations in the network to provide a security design for separation by hierarchy and by degree of importance or functions of the facility. An approach for achieving such a security is called Defense in depth.

The communication control devices such as barriers on different locations in the network contain setting information (hereinafter referred to as configuration information). The configuration information is important for security in each network. Therefore, in order to detect unintended changes in the configuration information, a periodic inspection by an administrator is typically conducted to check whether unwanted tampering has occurred. For example, the communication control device reports to the administrator when the configuration information is altered, or the communication control device stores change history in the configuration information in a non-volatile memory.

Although the communication control device needs to record the change history and operate in a high security state as described above, it is easy for a malicious attacker who can tamper with the communication control device and for an improper program such as virus to stop the reporting function and the recording of the change history or to delete the recording. Therefore, there is a need to provide a method of detecting unintended changes in information used for a device in a network system by means independent of function and health of the device itself.

The present invention has been made in order to solve such a problem, and an object of the invention is to provide a diagnostic apparatus and method which allows early detection of unintended changes in information used for a network system operation.

### Solution to Problem

A diagnostic apparatus related to of the invention is provided in a network system and configured to diagnose configuration information set in a communication control device. The network system includes: a network including a plurality of subnetworks connected to one another; and the communication control device configured to run in line with the configuration information set by an administrator and control communications in communication paths. The diagnostic apparatus is configured to: periodically read out the configuration information set in the communication control device as current configuration information, and read out original configuration information from a storage unit within the network system, the storage unit being configured to store in advance past configuration information as the original configuration information; periodically compare the current configuration information read out periodically from the communication control device with the original configuration information read out from the storage unit; and, if there is a mismatch between the original configuration information and the current configuration information read out from the communication control device, report to the administrator about the mismatch.

A diagnostic apparatus according to the invention is defined in claim 1 and is provided in a network system and configured to diagnose authentication information set in an authentication device. The network system includes: a network including a plurality of subnetworks connected to one another; and the authentication device configured to authenticate a login by an administrator to a device provided in the network based on the authentication information set by the administrator. The diagnostic apparatus is configured to: periodically read out the authentication information set in the authentication device as current authentication information, and read out original authentication information from a storage unit within the network system, the storage unit being configured to store in advance past authentication information as the original authentication information; periodically compare the current authentication information read out periodically from the authentication device with the original authentication information read out from the storage unit; and, if there is a mismatch between the original authentication information and the current authentication information read out from the authentication device, report to the administrator about the mismatch.

A diagnostic method related to the invention diagnoses configuration information set in a communication control device by a diagnostic apparatus provided in a network system. The network system includes: a network including a plurality of subnetworks connected to one another; and the communication control device configured to run in line with the configuration information set by an administrator and control communications in communication paths. The diagnostic method includes, by the diagnostic apparatus: periodically reading out the configuration information set in the communication control device as current configuration information, and reading out original configuration information from a storage unit within the network system, the storage unit being configured to store in advance past configuration information as the original configuration information; periodically comparing the current configuration information read out periodically from the communication control device with the original configuration information read out from the storage unit; and if there is a mismatch between the original configuration information and the current configuration information read out from the communication control device, reporting to the administrator about the mismatch.

A diagnostic method according to the invention is defined in claim 7 and diagnoses authentication information set in an authentication device by a diagnostic apparatus provided in a network system. The network system includes: a network including a plurality of subnetworks connected to one another; and the authentication device configured to authenticate a login by an administrator to a device provided in the network based on the authentication information set by the administrator. The diagnostic method includes, by the diagnostic apparatus: periodically reading out the authentication information set in the authentication device as current authentication information, and reading out original authentication information from a storage unit within the network system, the storage unit being configured to store in advance past authentication information as the original authentication information; periodically comparing the current authentication information read out periodically from the authentication device with the original authentication information read out from the storage unit; and, if there is a mismatch between the original authentication information and the current authentication information read out from the authentication device, reporting to the administrator about the mismatch.

### Advantageous Effects of Invention

According to a diagnostic apparatus and method related to the invention, current configuration information set in a communication control device and original configuration information stored in a storage unit are read out and compared, and, if there is a mismatch between them, a report about the mismatch is made to an administrator of the communication control device. With this feature, even if unintended changes such as falsification are made to the configuration information, it is possible to early detect the unintended changes in the configuration information independently of function and health of the communication control device itself.

According to a diagnostic apparatus and method of the invention, current authentication information set in an authentication device and original authentication information stored in a storage unit are read out and compared, and, if there is a mismatch between them, a report about the mismatch is made to an administrator. With this feature, even if unintended changes such as falsification are made to the authentication information, it is possible to early detect the unintended changes in the authentication information independently of function and health of the authentication device itself.

### Brief Description of Drawings

Fig. 1 is a schematic configuration diagram of a network system in related art.
Fig. 2 is a schematic diagram illustrating a process involved in a diagnostic apparatus.
Fig. 3 is a flowchart of a process performed by the diagnostic apparatus and a firewall.
Fig. 4 is a schematic configuration diagram of a network system in a second related art.
Fig. 5 is a schematic configuration diagram of a network system in a modification.
Fig. 6 is a schematic configuration diagram of a network system in embodiment of the invention.

### Description of Embodiments and related art

Exemplary embodiments of the present invention and related art will be described below with reference to the drawings.

### First related art

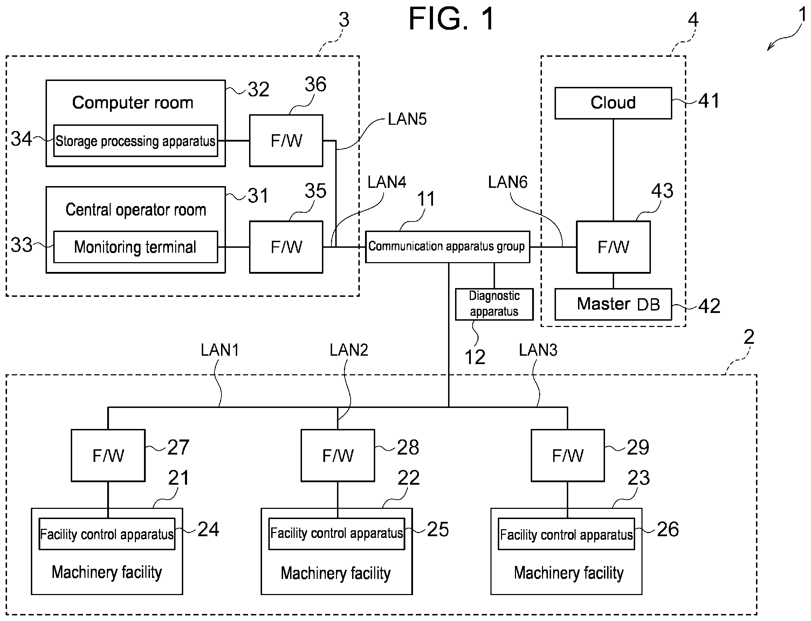

Fig. 1 is a schematic configuration diagram of a network system in a first related art.

A network system 1 includes an Operational Technology (OT) network 2 having a plurality of networks connected to one another via a communication apparatus group 11, a management network 3, and a dedicated line network 4. Devices included in the OT network 2, the management network 3, and the dedicated line network 4 are configured to communicate with one another beyond their local network via the communication apparatus group 11.

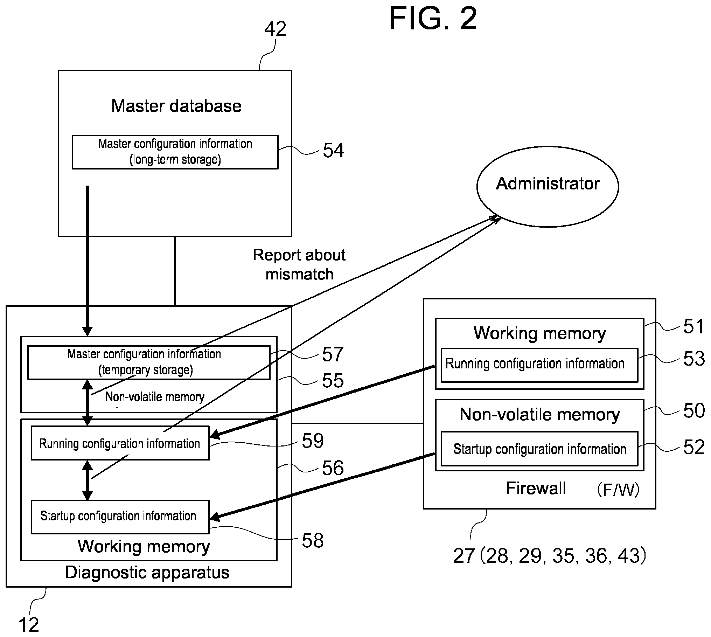

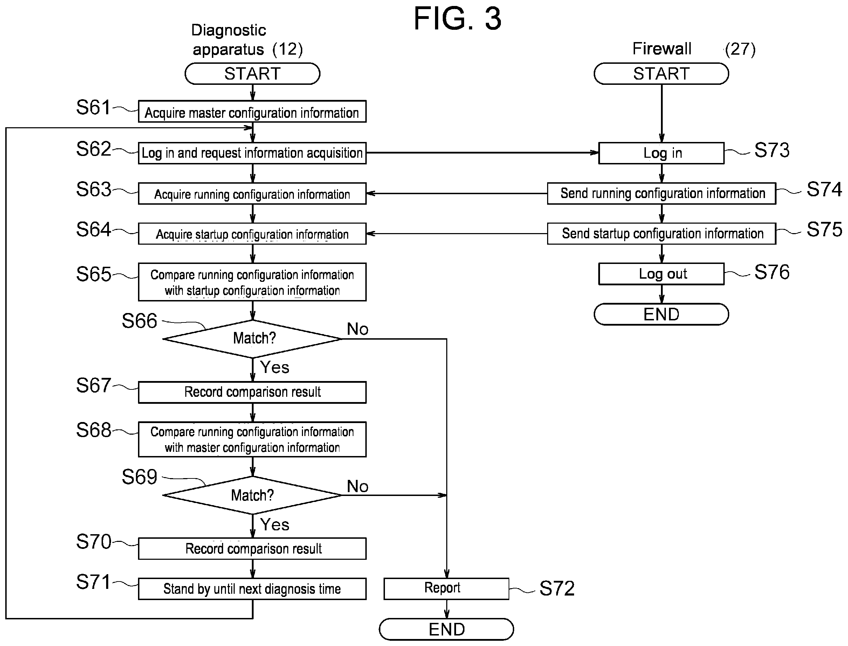

The communication apparatus group 11 may include one or more communication apparatuses. A diagnostic apparatus 12 is connected to the communication apparatus group 11 via a Local Area Network (LAN) or a console, and configured to communicate with firewalls within the OT network 2, the management network 3, and the dedicated line network 4 via the communication apparatus group 11. The diagnostic apparatus 12 has a program to diagnose configuration information of the firewall 27 at a given time interval. The diagnostic processing performed by the diagnostic apparatus 12 will be detailed below with reference to Figs. 2 and 3.

The OT network 2 includes any number of machinery facilities, such as three machinery facilities 21 to 23 in the related art. For example, the machinery facilities 21 to 23 are factory lines, and each includes a plurality of devices (not shown). The machinery facilities 21 to 23 further include facility control apparatuses 24 to 26, respectively, to control the devices. LAN 1 to LAN 3 are constructed as subnetworks for connecting the facility control apparatuses 24 to 26 and the devices of the machinery facilities 21 to 23.

The LAN 1 to LAN 3 allows the connection between the machinery facilities 21 to 23 and the communication apparatus group 11 via the firewalls 27 to 29, respectively. Any number of devices may be provided in each of the machinery facilities 21 to 23. The three machinery facilities 21 to 23 may be located on the same factory site or located remotely from one another. The firewalls 27 to 29 are one example of a communication control device.

Although the OT network 2 includes the three machinery facilities 21 to 23 in the example shown in Fig. 1, any number of machinery facilities may be provided, such as one, two, or four or more machinery facilities. The machinery facilities 21 to 23, including their devices and facility control apparatuses 24 to 26, may constitute any number of networks and may be connected to the communication apparatus group 11 via firewalls.

The management network 3 includes a central operator room 31 and a computer room 32. In the central operator room 31, a monitoring terminal 33 is provided for allowing an administrator to monitor the entire network system 1. In the computer room 32, a storage processing apparatus 34 is provided to store action logs in the entire network system 1. As a network for allowing the monitoring terminal 33 in the central operator room 31 to have an external connection, an LAN 4 is constructed. As a network for allowing the storage processing apparatus 34 in the computer room 32 to have an external connection, an LAN 5 is constructed. Other devices than the monitoring terminal 33 and the storage processing apparatus 34 may be connected to the LAN 4 and the LAN 5, respectively.

Particularly, in the central operator room 31, the administrator operates the monitoring terminal 33 to control the facility control apparatuses 24 to 26 in the OT network 2 via the communication apparatus group 11, thereby controlling and monitoring the devices of the machinery facilities 21 to 23. In the computer room 32, the storage processing apparatus 34 receives, via the communication apparatus group 11, control logs of the facility control apparatuses 24 to 26 in the OT network 2 and action logs of the devices of the machinery facilities 21 to 23, and records therein the logs. Any devices can be provided in the management network 3 for many purposes.

The dedicated line network 4 allows connection with a widely used cloud service 41 and other such services via a wide area network (WAN). Furthermore, the dedicated line network 4 includes a master database 42 for recording configuration information of various devices in the network system 1. The dedicated line network 4, denoted by an LAN 6 for the sake of simplicity, is connected to the communication apparatus group 11 via a firewall 43. The firewall 43 runs in line with configuration information and controls communications via communication paths within the network system 1.

Here, for the LAN 1 to LAN 6 connecting to the communication apparatus group 11, firewalls 27 to 29, 35, 36, and 43 are provided, respectively. In the firewalls 27 to 29, 35, 36, and 43, connection rules to permit or block data transmission are defined as configuration information. For example, according to the connection rules, the firewall 27 permits only the machinery facility 21 as a destination of data transmission and further permits only the monitoring terminal 33 as a source to send data to the machinery facility 21. The firewall 27 may switch between ports depending on the source and destination to permit data transmission of a specific application. The configuration information set in the firewalls 27 to 29, 35, 36, and 43 contains not only the connection rules, but also settings of class-map, ID and password of the administrator for access, and a service that runs when the firewall starts, and communications-related settings depending on communications capacity of the machinery facility 21 to be connected. The configuration information is stored in advance in the master database 42 through input operation by the administrator or other such operations. The configuration information is acquired from the master database 42 at the time of initializing or changing the settings of the firewalls 27 to 29, 35, 36, and 43.

Fig. 2 is a schematic diagram illustrating a process involved in the diagnostic apparatus 12. As shown in Fig. 2, the network system 1 includes the diagnostic apparatus 12, the firewall 27, and the master database 42. Here, for the sake of simplicity, the focus below will be on the firewall 27 because the rest of the firewalls 28, 29, 35, 36, and 43 work the same way as the firewall 27.

The firewall 27 is a device that includes a memory area storing computational algorithm programs, and executes a given program. The memory area includes a non-volatile memory 50 that can retain stored information even after power is off, and a working memory 51 (such as RAM) utilized as a temporary memory area during program execution. In the master database 42, master configuration information 54 is recorded by the administrator before initial startup of the firewall 27, as will be described later. In the non-volatile memory 50, the master configuration information 54 acquired at the time of the initial startup of the firewall 27 is stored as startup configuration information 52 (StartupConfig).

Specifically, in the master database 42, configuration information of the firewall 27 is recorded as the master configuration information 54 by the administrator before the initial startup of the firewall 27. That is, the master database 42 stores the master configuration information 54 as original configuration information for long periods of time. The master database 42 may be encrypted.

At the time of the initial startup, the firewall 27 acquires the master configuration information 54 of the firewall 27 stored in the master database 42 in accordance with the initial settings by the administrator, and records the acquired master configuration information 54 as the startup configuration information 52 in the non-volatile memory 50.

At each startup, the firewall 27 reads out the startup configuration information 52 from the non-volatile memory 50, and records the startup configuration information 52 as running configuration information 53 (RunningConfig) in the working memory 51. The running configuration information 53 is referenced by a program that is performed by the firewall 27.

The master configuration information 54 can be updated any time through operation by the administrator. Similarly, the firewall 27 can acquire the master configuration information 54 from the master database 42 any time through operation by the administrator, and overwrite the non-volatile memory 50 by recording the master configuration information 54 as the startup configuration information 52. The firewall 27 then reads out the startup configuration information 52 from the non-volatile memory 50 any time through operation by the administrator, and can record the startup configuration information 52 as the running configuration information 53 in the working memory 51. Through operation by the administrator, the startup configuration information 52 in the non-volatile memory 50 and the running configuration information 53 in the working memory 51 can be partially changed while the firewall 27 is running.

The diagnostic apparatus 12 include a non-volatile memory 55 and a working memory 56. The diagnostic apparatus 12 acquires the master configuration information 54 stored in advance in the master database 42 via the LAN 6, the communication apparatus group 11 and so on, and temporarily stores the acquired master configuration information 54 as master configuration information 57 in the non-volatile memory 55. The diagnostic apparatus 12 periodically acquires, from the firewall 27 via the LAN 1 and the communication apparatus group 11, the startup configuration information 52 stored in the non-volatile memory 50 as a storage unit and the current running configuration information 53 expanded in the working memory 51, and records the startup configuration information 52 and the current running configuration information 53 as startup configuration information 58 and running configuration information 59, respectively in the working memory 56.

The diagnostic apparatus 12 compares three types of configuration information, i.e., the startup configuration information 58 and the running configuration information 59 recorded in the working memory 56, and the master configuration information 57 recorded in the non-volatile memory 55, and determines whether there is a match between them. If there is a mismatch between their values, the diagnostic apparatus 12 sends a message indicating the mismatch to the monitoring terminal 33 in the central operator room 31 via e-mail, Push notification or other such notification means, thereby reporting to the administrator about the mismatch by displaying the message, or other such reporting means. Acquisition and comparison of the configuration information is repeated at a given time interval. Alternatively, the diagnostic apparatus 12 may compare the startup configuration information 58 and the running configuration information 59 with a value acquired in the past, and, if there is a mismatch between them, similarly report to the administrator about the mismatch.

Fig. 3 is a flowchart of a process performed by the diagnostic apparatus 12 and the firewall 27. The diagnostic apparatus 12 and the firewall 27 work in conjunction with each other. On the left side of Fig. 3, a process of steps S61 to S72 performed by the diagnostic apparatus 12 is shown, and on the right side of Fig. 3, a process of steps S73 to S76 performed by the firewall 27 is shown. As shown in Fig. 3, the process of steps S62 to S64 performed by the diagnostic apparatus 12 is in conjunction with the process of steps S73 to S75 performed by the firewall 27.

The diagnostic apparatus 12 performs the process shown in Fig. 3 at a given time interval, and starts the process without need for any user input. Upon start of the process, at step S61, the diagnostic apparatus 12 accesses the master database 42 to acquire the master configuration information 54, and temporarily stores the acquired master configuration information 54 as the master configuration information 57 in the non-volatile memory 55. The master database 42 stores the master configuration information 54 with a relatively high robustness such as by using an encryption key. The diagnostic apparatus 12 performs, for example, a decoding process to acquire the master configuration information 54 from the master database 42.

At step S62, the diagnostic apparatus 12 logs in to the firewall 27 by software processing within the diagnostic apparatus 12. If password authentication is required, ID and password as login information to the firewall 27 are registered in advance in the diagnostic apparatus 12, and the diagnostic apparatus 12 sends to the firewall 27 the login including the login information, and a request for acquiring the running configuration information 53 and the startup configuration information 52.

At step S73, the login by the diagnostic apparatus 12 to the firewall 27 is conducted. Upon receipt of the login including the login information and the request for information acquisition from the diagnostic apparatus 12, the firewall 27 compares the received login information with authentication information stored in advance, and permits the login if there is a match between them. The firewall 27 allows such login processing during normal operations. Upon receipt of the login request during the normal operations, the firewall 27 permits the login.

At step S74, in response to the login request from the diagnostic apparatus 12, the firewall 27 sends the running configuration information 53 recorded in the working memory 51 to the diagnostic apparatus 12. In the firewall 27, a command for outputting the running configuration information 53 is typically prepared, and the firewall 27 executes the command to output and send the running configuration information 53 to the diagnostic apparatus 12.

At step S75, the firewall 27 sends the startup configuration information 52 stored in the non-volatile memory 50 to the diagnostic apparatus 12. In the firewall 27, a command for reading out and outputting the startup configuration information 52 stored in the non-volatile memory 50 is prepared, and the firewall 27 executes the command to output and send the startup configuration information 52 to the diagnostic apparatus 12.

At step S76, after completion of sending the startup configuration information 52 and the running configuration information 53, the firewall 27 executes logout processing and continues the normal operations.

Referring back to the process by the diagnostic apparatus 12, the diagnostic apparatus 12 acquires, at step S63, the running configuration information 53 sent from the firewall 27 at step S74, and acquires, at step S64, the startup configuration information 52 sent from the firewall 27 at step S75. The diagnostic apparatus 12 stores, in the working memory 56, the startup configuration information 52 and the running configuration information 53 as the startup configuration information 58 and the running configuration information 59, respectively, along with time stamp.

At step S65, the diagnostic apparatus 12 compares the current running configuration information 59 and the startup configuration information 58 which are acquired and stored in the working memory 56.

At step S66, when the diagnostic apparatus 12 determines that there is a match between the current running configuration information 59 and the startup configuration information 58 (S66: Yes), the diagnostic apparatus 12 proceeds to step S67. If there is a mismatch between them (S66: No), the diagnostic apparatus 12 proceeds to step S72.

Upon determination that there is a mismatch between the running configuration information 59 and the startup configuration information 58 at step S66 (S66: No), the diagnostic apparatus 12 sends, to the monitoring terminal 33 in the central operator room 31, a message indicating the mismatch between the current running configuration information 53 and the startup configuration information 52 stored in the non-volatile memory 55, and, for example, causes a display device of the monitoring terminal 33 to display the message in order to report to the administrator about the mismatch at step S72.

On the other hand, upon determination that there is a match between the running configuration information 59 and the startup configuration information 58 at step S66 (S66: Yes), the diagnostic apparatus 12 records, for example, the comparison result indicating the match between them in the non-volatile memory 55 at step S67. At this time, acquisition time (time stamp) of the startup configuration information 52 and the running configuration information 53, which are comparison target, is also recorded.

At step S68 after step S67, the diagnostic apparatus 12 compares the acquired current running configuration information 53 with the master configuration information 54 stored in the non-volatile memory 55.

At step S69, the diagnostic apparatus 12 determines whether there is a match between the acquired current running configuration information 59 stored in the working memory 56 and the master configuration information 57 acquired at step S61 and stored in the non-volatile memory 55. If there is a match between them (S69: Yes), the diagnostic apparatus 12 proceeds to step S70, whereas there is a mismatch between them (S69: No), the diagnostic apparatus 12 proceeds to step S72.

Upon determination that there is a mismatch between them (S69: No), the diagnostic apparatus 12 sends, to the monitoring terminal 33 in the central operator room 31, a message indicating the mismatch between the acquired current running configuration information 59 and the master configuration information 57 stored in the non-volatile memory 55, and, for example, causes the display device of the monitoring terminal 33 to display the message in order to report to the administrator about the mismatch at step S72.

On the other hand, upon determination that there is a match between them at step S69 (S69: Yes), the diagnostic apparatus 12 records, for example, the comparison result indicating the match between them in the non-volatile memory 55 at step S70.

After step S70, the diagnostic apparatus 12 stands by until the next diagnosis time at step S71. After the standby time, the diagnostic apparatus 12 performs step S62 again. The standby time until the next diagnosis time indicate time interval between diagnoses. Any time interval may be set as the standby time though the standby time is preferably one to several hours. Thus, the diagnostic apparatus 12 periodically determines whether there is a match between the current running configuration information 53 and the startup configuration information 52, and periodically determines whether there is a match between the current running configuration information 53 and the master configuration information 54.

Although the above-described art describes the comparison between the running configuration information 53 and the startup configuration information 52, and the comparison between the running configuration information 53 and the master configuration information 54, the above-described art is not restrictive. Three types of configuration information, i.e., the running configuration information 53, the startup configuration information 52, and the master configuration information 54 may be compared simultaneously. Alternatively, at least one of the startup configuration information 52, the running configuration information 53, and the master configuration information 54 may be compared with time-stamped past configuration information.

Validation of the running configuration information 53, the startup configuration information 52, and the master configuration information 54 may be carried out. Such a validation process makes it possible to definitely detect unintended changes in configuration information.

The diagnostic apparatus 12 of the first related art reads out and records therein the running configuration information 53 of the firewall 27 and the startup configuration information 52 which is its original configuration information, compares the startup configuration information 52 with the running configuration information 53, and, if there is a mismatch between them, reports to the administrator of the firewall 27 about the mismatch.

Because the firewall 27 is a kind of computer which runs with software, it may have functional defects (also called vulnerability) that manufacturers never expected. A malicious attacker takes advantage of this vulnerability to alter configuration information. The firewall 27 detects unintended changes and executes a log function on the condition that a target device works properly. For example, temporary stopping of log may require a lot of time to detect the changes.

In the related art, the running configuration information 53 is periodically compared with the startup configuration information 52 which is the original configuration information. It is unlikely that unintended changes are made to both the startup configuration information 52 and the running configuration information 53 in a short time. Therefore, even if unintended changes such as falsification are made by a malicious attacker, the diagnostic apparatus 12 compares the startup configuration information 52 and the running configuration information 53, which makes it possible to detect the unintended changes. The diagnostic apparatus 12 of the related art performs such a comparison process periodically, which allows early detection of the changes.

Similarly, the diagnostic apparatus 12 is able to promptly diagnose the changes in the startup configuration information 52 and the running configuration information 53 of each of the firewalls 27, 28, 29, 35, 36, and 43 which are a plurality of communication control devices, and therefore easily change the number of firewalls as diagnostic targets.

Moreover, the diagnostic apparatus 12 of the first related art periodically reads out the startup configuration information 52 and the running configuration information 53 of the firewall 27, puts time stamp on them, and records them with time stamp. The diagnostic apparatus 12 then compares the startup configuration information 52 and the running configuration information 53 which are read out, with past startup configuration information 52 and past running configuration information 53, and, if there is at least one mismatch between them, reports to the administrator about the mismatch. With such a process, even if the unintended changes are made to both the startup configuration information 52 and the running configuration information 53, it is possible to detect the changes.

The network system 1 of the first related art includes an external storage medium such as the master database 42 which stores the master configuration information 54. For example, the firewall 27 acquires the master configuration information 54 from the master database 42, and sets the startup configuration information 52 at the time of initial settings or other such settings. The diagnostic apparatus 12 compares the startup configuration information 58 and the running configuration information 59 which are read out from the firewall 27 and recorded in the working memory 56, with the master configuration information 57 temporarily stored in the non-volatile memory 55, and, if there is a mismatch between them, reports to the administrator about the mismatch. This additional comparison makes it possible to definitely detect unintended changes in configuration information.

### Second Related Art

In the network system 1 of the first related art, the firewalls 27 to 29, 35, 36, and 43, which are the communication control devices, are provided for the LAN 1 to LAN 6, respectively, and these LAN 1 to LAN 6 are connected to one another via the communication apparatus group 11. However, the first related art is not restrictive. The second related art is directed to another layout of the communication control device.

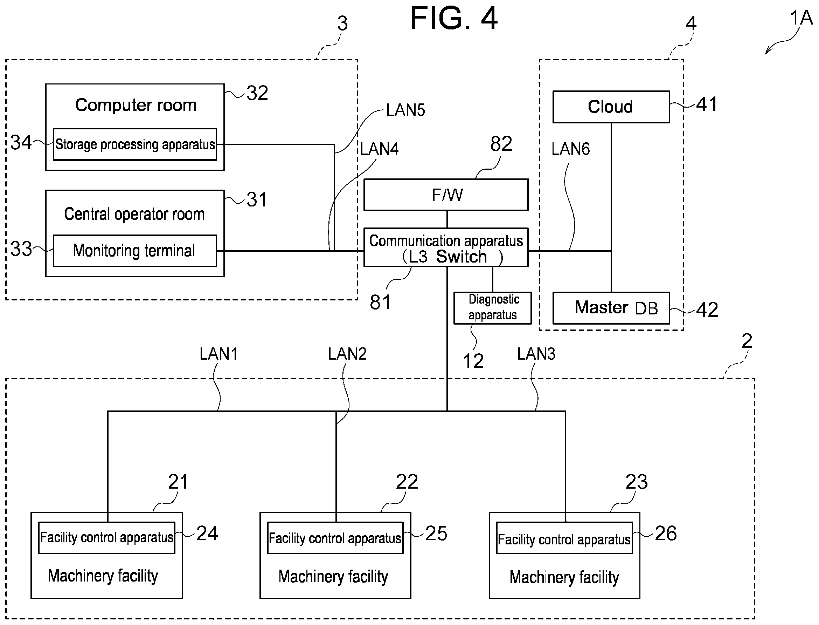

Fig. 4 is a schematic configuration diagram of a network system 1A in the second related art. Compared to the network system 1 of the first related art shown in Fig. 1, the network system 1A shown in Fig. 4 does not include the firewalls 27 to 29, 35, 36, and 43, but includes a communication apparatus 81 which is an L3 switch, and a firewall 82 connected to the communication apparatus 81.

In the OT network 2, each of the LAN 1 to LAN 3 connecting the facility control apparatuses 24 to 26 in the three machinery facilities 21 to 23 to the communication apparatus 81 may function as a Virtual Local Area Network (VLAN) provided with a virtual segment. Similarly, in the management network 3, each of the LAN 4 to LAN 5 connecting the monitoring terminal 33 in the central operator room 31 and the storage processing apparatus 34 in the computer room 32 to the communication apparatus 81 may function as VLAN. Similarly, the LAN 6 in the dedicated line network 4 may function as VLAN. Note that the LAN 1 to LAN 6 may not function as VLANs, and the LAN 1 to LAN 6 which are not VLANs may be connected to one another via the communication apparatus 81 which is the L3 switch.

The communication apparatus 81 which is the L3 switch connects these VLANs to one another, and connection rules of data for the VLANs are described in configuration information of the firewall 82. The connection rules of data indicate permission or blocking of data transmission similar to those for the firewalls 27 to 29, 35, 36, and 43 of the first related art. In addition to the connection rules, the configuration information contains various pieces of setting information such as services run at the time of startup.

The diagnostic apparatus 12 is accessible to the firewall 82 via the communication apparatus 81. By the same process as that of the first related artshown in Fig. 3, the diagnostic apparatus 12 reads out and compares the startup configuration information 52 stored in the non-volatile memory 50 in the firewall 82, the running configuration information 53 stored in the working memory 51, and the master configuration information 54 stored in the master database 42. The diagnostic apparatus 12 then periodically compares the current running configuration information 53 with the startup configuration information 52 to determine whether there is a match between them, and periodically compares the current running configuration information 53 with the master configuration information 54 to determine whether there is a match between them, in the same way as that of the above-described first related art. If the comparison results indicate the mismatch, the diagnostic apparatus 12 reports to the administrator about the mismatch.

In the network system 1A in which the LAN 1 to LAN 6 are connected to one another via the communication apparatus 81 which is the L3 switch, even if unintended changes such as falsification are made to the startup configuration information 52 and the running configuration information 53, the diagnostic apparatus 12 of the second related art is able to early detect the unintended changes in the same way as that of the above-described first related art without making a major modification to the configuration of the diagnostic apparatus 12.

### Modification

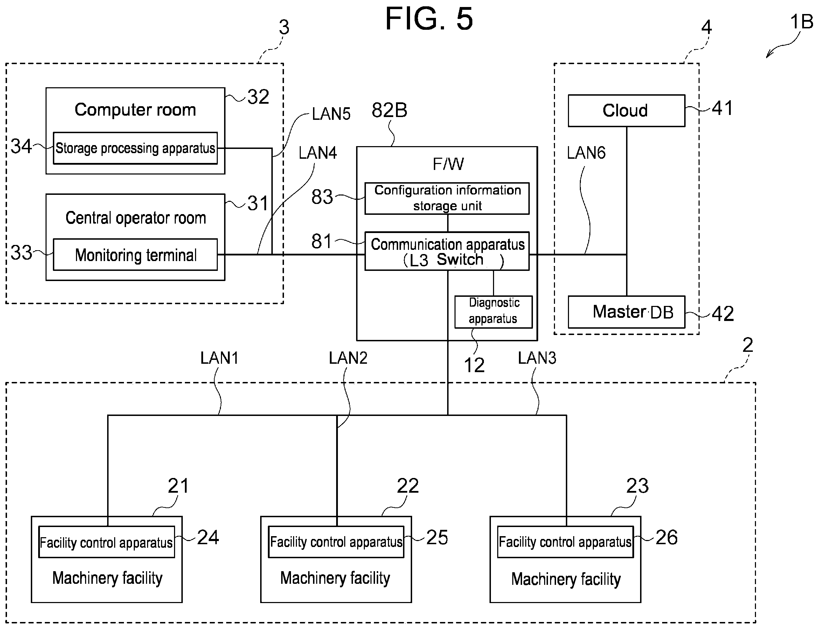

Although the communication apparatus 81 which is the L3 switch is provided separately from the firewall 82 in the second related art, the second related artis not restrictive. As shown in Fig. 5, a network system 1B may include a firewall 82B in which the communication apparatus 81, a configuration information storage unit 83, and the diagnostic apparatus 12 are integrated into a single package. The configuration information storage unit 83 is a storage unit which stores configuration information. It is therefore possible to easily replace an existing communication apparatus group or firewall with a new device.

### Embodiment of the invention

As a diagnosis technique to validate information used for a network system, the first and second related art employ a diagnosis technique, performed by the diagnostic apparatus 12, to validate the configuration information set in the firewall 82. The embodiment of the invention is directed to a diagnosis technique to validate other information used for the network system.

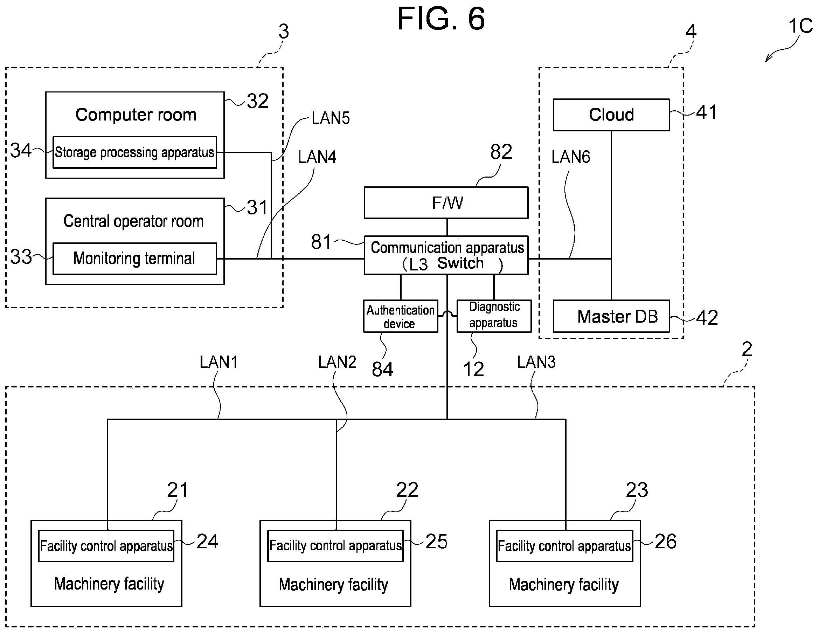

Fig. 6 is a schematic configuration diagram of a network system 1C of the embodiment of the invention. As shown in Fig. 6, compared to the network system 1B of the second related art shown in Fig. 4, the network system 1C of the embodiment of the invention further includes an authentication device 84 connected to the communication apparatus 81.

Irrespective of whether there is the OT network 2, some network systems may include the authentication device 84 configured to identify a device that makes an access request or identify a person using the device to permit the access to the network, as in the network system 1C. Examples of an authentication technique include installing an electronic certificate in a device such as a personal computer to allow a network connection authentication based on the electronic certificate. Specifically, a Remote Authentication Dial In User Service (RADIUS) server or other such devices can be employed. In order to identify a person who makes an access request, the authentication device 84 which allows password authentication or two-factor authentication may be employed as in an Active Directory (AD) server. Without limiting to the specific examples described above, the authentication device 84 stores identifiers of devices or persons whose accesses are permitted or whose accesses are not permitted, and stores the corresponding authentication information.

For example, the authentication device 84 is connected to both the communication apparatus 81 and the diagnostic apparatus 12. The authentication device 84 performs authentication processing for authenticating the administrator as a user when the administrator logs in to the communication apparatus 81 through the monitoring terminal 33 in the central operator room 31. The authentication information input by the administrator through the monitoring terminal 33 is sent to the authentication device 84 via the LAN 4 and the communication apparatus 81. If the authentication information received from the monitoring terminal 33 matches the authentication information stored in advance in the authentication device 84, the authentication device 84 stores the authentication information set from the monitoring terminal 33 as right information, and causes the communication apparatus 81 to permit the access from the monitoring terminal 33.

The authentication information set in the authentication device 84 in this manner is stored in the authentication device 84 and the master database 42. That is, in the master database 42, master authentication information is recorded based on setting by the administrator before initial startup of the authentication device 84. The authentication device 84 includes a non-volatile memory. At the time of the initial startup, the authentication device 84 records in the non-volatile memory the authentication information acquired via the LAN 4 and the communication apparatus 81, as startup authentication information. The authentication device 84 further includes a working memory. At each startup, the authentication device 84 reads out the startup authentication information from the non-volatile memory, and records it in the working memory as running authentication information.

The diagnostic apparatus 12 then performs a similar process to the above-described process shown in Fig. 3 along with the authentication device 84 connected to the diagnostic apparatus 12. That is, upon acquisition of the master authentication information from the master database 42, the diagnostic apparatus 12 records it in the non-volatile memory 55. Furthermore, upon acquisition of the startup authentication information and the running authentication information from the authentication device 84, the diagnostic apparatus 12 records them in the working memory 56. The diagnostic apparatus 12 then compares the running authentication information and the startup authentication information in the working memory 56, and further compares the running authentication information in the working memory 56 with the master authentication information in the non-volatile memory 55. If there is at least one mismatch between them as a result of the comparison, the diagnostic apparatus 12 reports to the administrator about the mismatch.

As described above, the diagnostic apparatus 12 of the embodiment of the invention periodically reads out the authentication information set in the authentication device 84, and reads out original authentication information (the startup authentication information and the master authentication information) from the non-volatile memory of the authentication device 84 and the master database 42 which are storage units in the network system 1C. The storage units store, in advance, past authentication information as the original authentication information. The diagnostic apparatus 12 then periodically compares the authentication information periodically read out from the authentication device 84 with the original authentication information read out from the storage units. If the current authentication information read out from the authentication device 84 does not match the original authentication information, the diagnostic apparatus 12 reports to the administrator of the authentication device 84 about the mismatch.

Using the diagnostic apparatus 12 of the embodiment of the invention, it is possible to early detect the unintended changes in the authentication information used for the authentication processing performed by the authentication device 84 without making a major modification to the configuration of the diagnostic apparatus 12 demonstrated in the first and second related art. In conjunction with the diagnostic processing demonstrated in the embodiment of the invention, the diagnostic apparatus 12 performs the diagnostic processing demonstrated in the first and second related art to validate the configuration information of the firewall 27, which makes it possible to comprehensively diagnose the configuration information of the firewall 27 and the authentication information of the authentication device 84.

### Modification

Although the embodiment of the invention is directed to the network system 1C in which the communication apparatus 81 is provided alongside the authentication device 84, the invention is not limited to the embodiment of the invention. For example, an alternative network system may be employed in which the facility control apparatuses 24 to 26 in the OT network 2, the monitoring terminal 33 and the storage processing apparatus 34 in the management network 3, and the master database 42 in the dedicated line network 4 are provided with separate authentication devices 84, respectively. The devices included in the machinery facilities 21 to 23 in the OT network 2 may also be provided with separate authentication devices 84, respectively. Even if the devices constituting the network system are suitably provided with the authentication devices 84, respectively, it is possible to make a diagnosis to validate the pieces of authentication information which are set in the respective authentication devices 84 using the diagnostic apparatus 12 of the above-described embodiment of the invention. The authentication devices 84 may be provided with separate diagnostic apparatuses 12, respectively. The diagnostic apparatus 12 may be provided for each subnetwork, for each OT network 2, for each management network 3, or the like.

In the OT network 2 such as production sites and infrastructures, if authentication processing for authenticating terminal apparatuses or devices is performed by a remote device such as a cloud, operation and maintenance in the OT network 2 may become difficult, and response performance may become worse. In this modification, on the other hand, the authentication processing in the OT network 2, the management network 3, and the dedicated line network 4 can be performed locally, and verification of the authentication information in other authentication devices can be performed periodically, which leads to early detection of unintended changes in the authentication information in other authentication devices independently of states of communication.

Various embodiments can be implemented and various modifications can be made without departing from the scope of the invention as defined in the claims. The above-described embodiments are to be considered in all respects only as illustrative and not restrictive. The scope of the invention is, therefore, indicated by the appended claims rather than by the embodiments.

### Reference Signs List

1, 1A, 1B, 1C: Network system
2: OT network (Network)
11: Communication apparatus group
12: Diagnostic apparatus
27 to 29, 35, 36, 43, 82, 82B : Firewall (Communication control device)
42: Master database (Storage unit)
50, 55: Non-volatile memory (Storage unit)
52, 58: Startup configuration information (Original configuration information)
53, 59: Running configuration information
54, 57: Master configuration information (Original configuration information)
81: Communication apparatus
84: Authentication device
LAN1 to LAN6 (Subnetwork)

## Claims

1. A diagnostic apparatus (12) provided in a network system (1C) and configured to diagnose authentication information (52, 53) set in an authentication device (84), the network system (1C) comprising: a network including a plurality of subnetworks (2, 3, 4) connected to one another; and the authentication device (84) configured to authenticate a login by an administrator to a device provided in the network based on the authentication information (52, 53) set by the administrator , the diagnostic apparatus (12) **characterized by** being configured to:
periodically read out the authentication information (52, 53) set in the authentication device (84)as current authentication information (52, 53), and read out original authentication information (57) from a storage unit (42) within the network system (1C), the storage unit (42) being configured to store in advance past authentication information (57) as the original authentication information and being a non-volatile memory of the authentication device (84);
periodically compare the current authentication information (52, 53) read out periodically from the authentication device (84) with the original authentication information (57) read out from the storage unit (42); and
if there is a mismatch between the original authentication information (57) and the current authentication information (52, 53) read out from the authentication device (84), report to the administrator about the mismatch;
read out startup authentication information (52) stored as the original authentication information in the non-volatile memory (50);
periodically read out running authentication information (53) as current running authentication information from the authentication device (84), wherein at startup of the authentication device (84), the startup authentication information (52) is read out and recorded as the running authentication information (53) in a working memory (51) of the authentication device (84), and the authentication device (84) is configured to run in line with the running authentication information (53);
periodically compare the startup authentication information (52) and the current running authentication information (53) read out from the authentication device (84); and
if there is a mismatch between the current running authentication information (53) and the startup authentication information (52), report to the administrator about the mismatch.

2. The diagnostic apparatus (12) according to claim 1, configured to:
record the startup authentication information (52) and the running authentication information (53) read out from the authentication device (84), as past startup authentication information (58) and past running authentication information (59), respectively;
periodically compare the startup authentication information (52) and the running authentication information (53) read out from the authentication device (84), with the past startup authentication information (58) and the past running authentication information (59) that are recorded, respectively; and
if there is at least one mismatch between the startup authentication information (52) and the running authentication information (53) read out from the authentication device (84), and the past startup authentication information (58) and the past running authentication information (59) that are recorded, report to the administrator about the mismatch.

3. The diagnostic apparatus (12) according to claim 1, wherein
the storage unit is an external storage medium provided in the network system (1C), and
the diagnostic apparatus (12) is configured to:
read out master authentication information (54) from the external storage medium (42) that stores the master authentication information (54) as the original authentication information, and read out the current authentication information (52, 53) from the authentication device (84);
periodically compare the current authentication information (52, 53) read out from the authentication device (84) with the master authentication information (54) read out from the external storage medium (42); and
if there is a mismatch between the master authentication information (54) and the current authentication information (52, 53) read out from the authentication device (84), report to the administrator about the mismatch.

4. The diagnostic apparatus according to claim 1, wherein
the authentication information (52, 53) contains an identifier indicating one of a source of data transmitting through the authentication device (84), a destination of the data transmitting through the authentication device (84), and a service of the data.

5. The diagnostic apparatus according to claim 1, wherein
the authentication device (84) is a firewall provided in each of the authentication paths of the plurality of subnetworks (2, 3, 4).

6. The diagnostic apparatus according to claim 1, wherein
the authentication device (84) is an L3 switch configured to connect the plurality of subnetworks (2, 3, 4) to one another.

7. A diagnostic method for diagnosing authentication information (52, 53) set in an authentication device (84) by a diagnostic apparatus (12) provided in a network system (1C), the network system (1C) comprising: a network including a plurality of subnetworks (2, 3, 4) connected to one another; and the authentication device (84) configured to authenticate a login by an administrator to a device provided in the network based on the authentication information (52, 53) set by the administrator, the diagnostic method **characterized by** comprising, by the diagnostic apparatus:
periodically reading out the authentication information set in the authentication device as current authentication information (52, 53), and reading out original authentication information from a storage unit (42) within the network system (1C), the storage unit (42) being configured to store in advance past authentication information as the original authentication information and being a non-volatile memory of the authentication device (84);
periodically comparing the current authentication information (52, 53) read out periodically from the authentication device (84) with the original authentication information read out from the storage unit (42);
if there is a mismatch between the original authentication information and the current authentication information (52, 53) read out from the authentication device (84), reporting to the administrator about the mismatch;
reading out startup authentication information (52) stored as the original authentication information in the non-volatile memory (50);
periodically reading out running authentication information (53) as current running authentication information from the authentication device (84), wherein at startup of the authentication device (84), the startup authentication information (52) is read out and recorded as the running authentication information (53) in a working memory (51) of the authentication device (84), and the authentication device (84) is configured to run in line with the running authentication information (53);
periodically comparing the startup authentication information (52) and the current running authentication information (53) read out from the authentication device (84); and
if there is a mismatch between the current running authentication information (53) and the startup authentication information (52), reporting to the administrator about the mismatch.

## Patentansprüche

1. Diagnosevorrichtung (12), die in einem Netzwerksystem (1C) vorgesehen ist und dazu konfiguriert ist, Authentifizierungsinformationen (52, 53) zu diagnostizieren, die in einer Authentifizierungsvorrichtung (84) eingestellt sind, wobei das Netzwerksystem (1C) umfasst: ein Netzwerk, das eine Vielzahl von Teilnetzwerken (2, 3, 4) umfasst, die miteinander verbunden sind; und die Authentifizierungsvorrichtung (84), die dazu konfiguriert ist, eine Anmeldung durch einen Administrator an einer im Netzwerk vorgesehenen Vorrichtung basierend auf den Authentifizierungsinformationen (52, 53) zu authentifizieren, die durch den Administrator eingestellt sind, wobei die Diagnosevorrichtung (12) **dadurch gekennzeichnet ist, dass** sie konfiguriert ist zum:
periodischen Auslesen der Authentifizierungsinformationen (52, 53), die in der Authentifizierungsvorrichtung (84) als aktuelle Authentifizierungsinformationen (52, 53) eingestellt sind, und Auslesen ursprünglicher Authentifizierungsinformationen (57) aus einer Speichereinheit (42) innerhalb des Netzwerksystems (1C), wobei die Speichereinheit (42) dazu konfiguriert ist, im Voraus vergangene Authentifizierungsinformationen (57) als die ursprünglichen Authentifizierungsinformationen zu speichern und ein nichtflüchtiger Speicher der Authentifizierungsvorrichtung (84) ist;
periodischen Vergleichen der aktuellen Authentifizierungsinformationen (52, 53), die periodisch aus der Authentifizierungsvorrichtung (84) ausgelesen werden, mit den ursprünglichen Authentifizierungsinformationen (57), die aus der Speichereinheit (42) ausgelesen werden; und
wenn eine Nichtübereinstimmung zwischen den ursprünglichen Authentifizierungsinformationen (57) und den aktuellen Authentifizierungsinformationen (52, 53), die aus der Authentifizierungsvorrichtung (84) ausgelesen werden, besteht, Unterrichten des Administrators über die Nichtübereinstimmung;
Auslesen von Startauthentifizierungsinformationen (52), die als die ursprünglichen Authentifizierungsinformationen im nichtflüchtigen Speicher (50) gespeichert sind;
periodischen Auslesen von laufenden Authentifizierungsinformationen (53) als aktuelle laufende Authentifizierungsinformationen aus der Authentifizierungsvorrichtung (84), wobei beim Start der Authentifizierungsvorrichtung (84) die Startauthentifizierungsinformationen (52) ausgelesen und als die laufenden Authentifizierungsinformationen (53) in einem Arbeitsspeicher (51) der Authentifizierungsvorrichtung (84) aufgezeichnet werden, und die Authentifizierungsvorrichtung (84) dazu konfiguriert ist, gemäß den laufenden Authentifizierungsinformationen (53) zu arbeiten;
periodischen Vergleichen der Startauthentifizierungsinformationen (52) und der aktuellen laufenden Authentifizierungsinformationen (53), die aus der Authentifizierungsvorrichtung (84) ausgelesen werden; und
wenn eine Nichtübereinstimmung zwischen den aktuellen laufenden Authentifizierungsinformationen (53) und den Startauthentifizierungsinformationen (52) besteht, Unterrichten des Administrators über die Nichtübereinstimmung.

2. Diagnosevorrichtung (12) nach Anspruch 1, konfiguriert zum:
Aufzeichnen der Startauthentifizierungsinformationen (52) und der laufenden Authentifizierungsinformationen (53), die aus der Authentifizierungsvorrichtung (84) ausgelesen werden, als vergangene Startauthentifizierungsinformationen (58) bzw. vergangene laufende Authentifizierungsinformationen (59);
periodischen Vergleichen der Startauthentifizierungsinformationen (52) und der laufenden Authentifizierungsinformationen (53), die aus der Authentifizierungsvorrichtung (84) ausgelesen werden, mit den vergangenen Startauthentifizierungsinformationen (58) bzw. den vergangenen laufenden Authentifizierungsinformationen (59), die aufgezeichnet sind; und
wenn mindestens eine Nichtübereinstimmung zwischen den Startauthentifizierungsinformationen (52) und den laufenden Authentifizierungsinformationen (53), die aus der Authentifizierungsvorrichtung (84) ausgelesen werden, und den vergangenen Startauthentifizierungsinformationen (58) und den vergangenen laufenden Authentifizierungsinformationen (59), die aufgezeichnet sind, besteht, Unterrichten des Administrators über die Nichtübereinstimmung.

3. Diagnosevorrichtung (12) nach Anspruch 1, wobei die Speichereinheit ein externes Speichermedium ist, das im Netzwerksystem (1C) vorgesehen ist, und die Diagnosevorrichtung (12) konfiguriert ist zum:
Auslesen von Masterauthentifizierungsinformationen (54) aus dem externen Speichermedium (42), das die Masterauthentifizierungsinformationen (54) als die ursprünglichen Authentifizierungsinformationen speichert, und Auslesen der aktuellen Authentifizierungsinformationen (52, 53) aus der Authentifizierungsvorrichtung (84);
periodischen Vergleichen der aktuellen Authentifizierungsinformationen (52, 53), die aus der Authentifizierungsvorrichtung (84) ausgelesen werden, mit den Masterauthentifizierungsinformationen (54), die aus dem externen Speichermedium (42) ausgelesen werden; und
wenn eine Nichtübereinstimmung zwischen den Masterauthentifizierungsinformationen (54) und den aktuellen Authentifizierungsinformationen (52, 53), die aus der Authentifizierungsvorrichtung (84) ausgelesen werden, besteht, Unterrichten des Administrators über die Nichtübereinstimmung.

4. Diagnosevorrichtung nach Anspruch 1, wobei die Authentifizierungsinformationen (52, 53) eine Kennung enthalten, die eine Quelle von Daten, die durch die Authentifizierungsvorrichtung (84) übertragen werden, ein Ziel der Daten, die durch die Authentifizierungsvorrichtung (84) übertragen werden, oder einen Dienst der Daten angibt.

5. Diagnosevorrichtung nach Anspruch 1, wobei die Authentifizierungsvorrichtung (84) eine Firewall ist, die in jedem der Authentifizierungspfade der Vielzahl von Teilnetzwerken (2, 3, 4) vorgesehen ist.

6. Diagnosevorrichtung nach Anspruch 1, wobei die Authentifizierungsvorrichtung (84) ein L3-Switch ist, der dazu konfiguriert ist, die Vielzahl von Teilnetzwerken (2, 3, 4) miteinander zu verbinden.

7. Diagnoseverfahren zum Diagnostizieren von Authentifizierungsinformationen (52, 53), die in einer Authentifizierungsvorrichtung (84) eingestellt sind, durch eine Diagnosevorrichtung (12), die in einem Netzwerksystem (1C) vorgesehen ist, wobei das Netzwerksystem (1C) umfasst: ein Netzwerk, das eine Vielzahl von Teilnetzwerken (2, 3, 4) umfasst, die miteinander verbunden sind; und die Authentifizierungsvorrichtung (84), die dazu konfiguriert ist, eine Anmeldung durch einen Administrator an einer im Netzwerk vorgesehenen Vorrichtung basierend auf den Authentifizierungsinformationen (52, 53) zu authentifizieren, die durch den Administrator eingestellt sind, wobei das Diagnoseverfahren **dadurch gekennzeichnet ist, dass** es durch die Diagnosevorrichtung umfasst:
periodisches Auslesen der Authentifizierungsinformationen, die in der Authentifizierungsvorrichtung als aktuelle Authentifizierungsinformationen (52, 53) eingestellt sind, und Auslesen ursprünglicher Authentifizierungsinformationen aus einer Speichereinheit (42) innerhalb des Netzwerksystems (1C), wobei die Speichereinheit (42) dazu konfiguriert ist, im Voraus vergangene Authentifizierungsinformationen als die ursprünglichen Authentifizierungsinformationen zu speichern und ein nichtflüchtiger Speicher der Authentifizierungsvorrichtung (84) ist;
periodisches Vergleichen der aktuellen Authentifizierungsinformationen (52, 53), die periodisch aus der Authentifizierungsvorrichtung (84) ausgelesen werden, mit den ursprünglichen Authentifizierungsinformationen, die aus der Speichereinheit (42) ausgelesen werden;
wenn eine Nichtübereinstimmung zwischen den ursprünglichen Authentifizierungsinformationen und den aktuellen Authentifizierungsinformationen (52, 53), die aus der Authentifizierungsvorrichtung (84) ausgelesen werden, besteht, Unterrichten des Administrators über die Nichtübereinstimmung;
Auslesen von Startauthentifizierungsinformationen (52), die als die ursprünglichen Authentifizierungsinformationen im nichtflüchtigen Speicher (50) gespeichert sind;
periodisches Auslesen von laufenden Authentifizierungsinformationen (53) als aktuelle laufende Authentifizierungsinformationen aus der Authentifizierungsvorrichtung (84), wobei beim Start der Authentifizierungsvorrichtung (84) die Startauthentifizierungsinformationen (52) ausgelesen und als die laufenden Authentifizierungsinformationen (53) in einem Arbeitsspeicher (51) der Authentifizierungsvorrichtung (84) aufgezeichnet werden, und die Authentifizierungsvorrichtung (84) dazu konfiguriert ist, gemäß den laufenden Authentifizierungsinformationen (53) zu arbeiten;
periodisches Vergleichen der Startauthentifizierungsinformationen (52) und der aktuellen laufenden Authentifizierungsinformationen (53), die aus der Authentifizierungsvorrichtung (84) ausgelesen werden; und
wenn eine Nichtübereinstimmung zwischen den aktuellen laufenden Authentifizierungsinformationen (53) und den Startauthentifizierungsinformationen (52) besteht, Unterrichten des Administrators über die Nichtübereinstimmung.

## Revendications

1. Appareil (12) de diagnostic prévu dans un système (1C) de réseau et configuré pour diagnostiquer des informations (52, 53) d'authentification définies dans un dispositif (84) d'authentification, le système (1C) de réseau comprenant : un réseau incluant une pluralité de sous-réseaux (2, 3, 4) connectés les uns aux autres ; et le dispositif (84) d'authentification configuré pour authentifier une connexion par un administrateur à un dispositif prévu dans le réseau sur la base des informations (52, 53) d'authentification définies par l'administrateur, l'appareil (12) de diagnostic **caractérisé en ce qu'**étant configuré pour :
lire périodiquement les informations (52, 53) d'authentification définies dans le dispositif (84) d'authentification comme des informations (52, 53) d'authentification courantes, et lire des informations (57) d'authentification d'origine dans une unité (42) de stockage à l'intérieur du système (1C) de réseau, l'unité (42) de stockage étant configurée pour stocker au préalable des informations (57) d'authentification passées comme les informations d'authentification d'origine et étant une mémoire non volatile du dispositif (84) d'authentification ;
comparer périodiquement les informations (52, 53) d'authentification courantes lues périodiquement dans le dispositif (84) d'authentification avec les informations (57) d'authentification d'origine lues dans l'unité (42) de stockage ; et
s'il y a une non correspondance entre les informations (57) d'authentification d'origine et les informations (52, 53) d'authentification courantes lues dans le dispositif (84) d'authentification, informer l'administrateur de la non correspondance ;
lire des informations (52) d'authentification de démarrage stockées comme les informations d'authentification d'origine dans la mémoire non volatile (50) ;
lire périodiquement des informations (53) d'authentification de fonctionnement comme des informations d'authentification de fonctionnement courantes dans le dispositif (84) d'authentification, dans lequel, au démarrage du dispositif (84) d'authentification, les informations (52) d'authentification de démarrage sont lues et enregistrées comme les informations (53) d'authentification de fonctionnement dans une mémoire (51) de travail du dispositif (84) d'authentification, et le dispositif (84) d'authentification est configuré pour fonctionner conformément aux informations (53) d'authentification de fonctionnement ;
comparer périodiquement les informations (52) d'authentification de démarrage et les informations (53) d'authentification de fonctionnement courantes lues dans le dispositif (84) d'authentification ; et
s'il y a une non correspondance entre les informations (53) d'authentification de fonctionnement courantes et les informations (52) d'authentification de démarrage, informer l'administrateur de la non correspondance.

2. Appareil (12) de diagnostic selon la revendication 1, configuré pour :
enregistrer les informations (52) d'authentification de démarrage et les informations (53) d'authentification de fonctionnement lues dans le dispositif (84) d'authentification, comme des informations (58) d'authentification de démarrage passées et des informations (59) d'authentification de fonctionnement passées, respectivement ;
comparer périodiquement les informations (52) d'authentification de démarrage et les informations (53) d'authentification de fonctionnement lues dans le dispositif (84) d'authentification, avec les informations (58) d'authentification de démarrage passées et les informations (59) d'authentification de fonctionnement passées qui sont enregistrées, respectivement ; et
s'il y a au moins une non correspondance entre les informations (52) d'authentification de démarrage et les informations (53) d'authentification de fonctionnement lues dans le dispositif (84) d'authentification, et les informations (58) d'authentification de démarrage passées et les informations (59) d'authentification de fonctionnement passées qui sont enregistrées, informer l'administrateur de la non correspondance.

3. Appareil (12) de diagnostic selon la revendication 1, dans lequel
l'unité de stockage est un support de stockage externe prévu dans le système (1C) de réseau, et
l'appareil (12) de diagnostic est configuré pour :
lire des informations (54) d'authentification maîtres dans le support (42) de stockage externe qui stocke les informations (54) d'authentification maîtres comme les informations d'authentification d'origine, et lire les informations (52, 53) d'authentification courantes dans le dispositif (84) d'authentification ;
comparer périodiquement les informations (52, 53) d'authentification courantes lues dans le dispositif (84) d'authentification avec les informations (54) d'authentification maîtres lues dans le support (42) de stockage externe ; et
s'il y a une non correspondance entre les informations (54) d'authentification maîtres et les informations (52, 53) d'authentification courantes lues dans le dispositif (84) d'authentification, informer l'administrateur de la non correspondance.

4. Appareil de diagnostic selon la revendication 1, dans lequel
les informations (52, 53) d'authentification contiennent un identifiant indiquant un(e) parmi une source de données transmises par l'intermédiaire du dispositif (84) d'authentification, une destination des données transmises par l'intermédiaire du dispositif (84) d'authentification, et un service des données.

5. Appareil de diagnostic selon la revendication 1, dans lequel
le dispositif (84) d'authentification est un pare-feu prévu dans chacun des chemins d'identification de la pluralité de sous-réseaux (2, 3, 4).

6. Appareil de diagnostic selon la revendication 1, dans lequel
le dispositif (84) d'authentification est un commutateur L3 configuré pour connecter la pluralité de sous-réseaux (2, 3, 4) les uns aux autres.

7. Procédé de diagnostic pour diagnostiquer des informations (52, 53) d'authentification définies dans un dispositif (84) d'authentification par un appareil (12) de diagnostic prévu dans un système (1C) de réseau, le système (1C) de réseau comprenant : un réseau incluant une pluralité de sous-réseaux (2, 3, 4) connectés les uns aux autres ; et le dispositif (84) d'authentification configuré pour authentifier une connexion par un administrateur à un dispositif prévu dans le réseau sur la base des informations (52, 53) d'authentification définies par l'administrateur, le procédé de diagnostic **caractérisé en ce que** comprenant, par l'appareil de diagnostic :
une lecture périodique des informations d'authentification définies dans le dispositif d'authentification comme des informations (52, 53) d'authentification courantes, et une lecture d'informations d'authentification d'origine dans une unité (42) de stockage à l'intérieur du système (1C) de réseau, l'unité (42) de stockage étant configurée pour stocker au préalable des informations d'authentification passées comme les informations d'authentification d'origine et étant une mémoire non volatile du dispositif (84) d'authentification ;
une comparaison périodique des informations (52, 53) d'authentification courantes lues périodiquement dans le dispositif (84) d'authentification avec les informations d'authentification d'origine lues dans l'unité (42) de stockage ;
s'il y a une non correspondance entre les informations d'authentification d'origine et les informations (52, 53) d'authentification courantes lues dans le dispositif (84) d'authentification, l'information de l'administrateur de la non correspondance ;
une lecture d'informations (52) d'authentification de démarrage stockées comme les informations d'authentification d'origine dans la mémoire non volatile (50) ;
une lecture périodique d'informations (53) d'authentification de fonctionnement comme des informations d'authentification de fonctionnement courantes dans le dispositif (84) d'authentification, dans lequel, au démarrage du dispositif (84) d'authentification, les informations (52) d'authentification de démarrage sont lues et enregistrées comme les informations (53) d'authentification de fonctionnement dans une mémoire (51) de travail du dispositif (84) d'authentification, et le dispositif (84) d'authentification est configuré pour fonctionner conformément aux informations (53) d'authentification de fonctionnement ;
une comparaison périodique des informations (52) d'authentification de démarrage et des informations (53) d'authentification de fonctionnement courantes lues dans le dispositif (84) d'authentification ; et
s'il y a une non correspondance entre les informations (53) d'authentification de fonctionnement courantes et les informations (52) d'authentification de démarrage, l'information de l'administrateur de la non correspondance.
